# EUROPÄISCHE PATENTSCHRIFT

(11) **EP 0 708 467 B1**
(45) Veröffentlichungstag und Bekanntmachung des Hinweises auf die Patenterteilung: **13.01.1999**
(21) Anmeldenummer: 95114278.5
(22) Anmeldetag: 12.09.1995
(51) Int. Cl.: H01H 35/14

(54) **Beschleunigungsgrenzwertschalter**
Acceleration value limiting switch
Détecteur de valeurs limites d'accélération

(30) Priorität: 26.09.1994 DE 4434349
(43) Veröffentlichungstag der Anmeldung: 24.04.1996
(73) Patentinhaber: Burmester, Heino, 42579 Heiligenhaus (DE)
(72) Erfinder: Burmester, Heino, 42579 Heiligenhaus (DE)
(74) Vertreter: Götz, Friedrich, Dipl.-Phys.

(56) Entgegenhaltungen:
- DE-A- 3 022 878
- DE-U- 8 310 623
- DE-U- 8 401 991
- US-A- 5 010 217

## Beschreibung

### Technisches Gebiet

Gegenstand der Erfindung ist ein Beschleunigungsgrenzwertschalter mit einem kugelförmigen Trägheitskörper aus ferromagnetischem Material, der von einem Dauermagneten in Ruhestellung gehalten ist, dem auf einer Leiterplatte zwei symmetrisch ineinandergreifende Kontaktelemente gegenüberstehen, wobei zwischen dem Trägheitskörper und der Leiterplatte eine elastische, leitfähige Membran befestigt ist, die beim Auftreffen des Trägheitskörpers verformt wird und dabei die Kontaktelemente verbindet.

### Stand der Technik

Aus dem deutschen Patent DE 30 22 878 ist ein oben definierter Beschleunigungsgrenzwertschalter bekannt geworden, der aus einem Gehäuse mit Dauermagnet, einem von diesem Magneten gehaltenen Trägheitskörper und einem Kontaktsystem besteht. Dieses System weist eine leitfähige Membran und eine Leiterplatte mit kammartig ineinandergreifenden Leiterbahnen auf.
Die Leiterplatte und die Membran werden von einem übergreifenden Deckel gehalten, der Bohrungen zur Durchführung der Anschlußstifte aufweist.
Das zylindrische Gehäuse zeigt im Mantelbereich eine umlaufende Nut, in die ein O-Ring eingesetzt ist. Beim Aufschieben des Deckels dichtet sein Kragen unter Verformung des O-Ringes den Innenraum des Schalters ab.
Der bekannte und seit vielen Jahren erfolgreich eingesetzte Schalter benötigt außer einer geformten und damit teuren Kontaktmembran eine Leiterplatte mit eingelöteten Stiften sowie einen mit Kragen versehenen Deckel. Die Art der Abdichtung erfordert sehr kleine Toleranzen für Gehäuse und Deckel.

### Darstellung der Erfindung

Der Erfindung liegt die Aufgabe zugrunde, den bekannten Schalter ohne Einbußen an Zuverlässigkeit und Ansprechgenauigkeit entscheidend zu vereinfachen und zu verbilligen.

Dies gelingt gemäß der Erfindung dadurch, daß der rotationssymmetrische Innenraum des Schalters eine ringförmige Lagerfläche für eine dünne Leitkunststoff-Matte aufweist, daß die Leiterplatte als Gehäusedeckel auf einem umlaufenden Gehäusesteg aufliegt, daß außerhalb dieses Steges ein Dichtungsring liegt und daß die Leiterplatte unter Deformation des Dichtungsringes von gehäuseseitig angeformten, federnden Haken gehalten ist.

### Beschreibung der Zeichnungen

Ein Ausführungsbeispiel der Erfindung wird anhand von Fig. 1 - 6 der Zeichnung beschrieben.
- Fig. 1: zeigt einen Längsschnitt durch den Beschleunigungsgrenzwertschalter,
- Fig. 2: die Leiterplatte,
- Fig. 3: die Leitkunststoff-Matte,
- Fig. 4: die Ansicht von oben,
- Fig. 5: die Ansicht von links,
- Fig. 6: die Ansicht von unten.

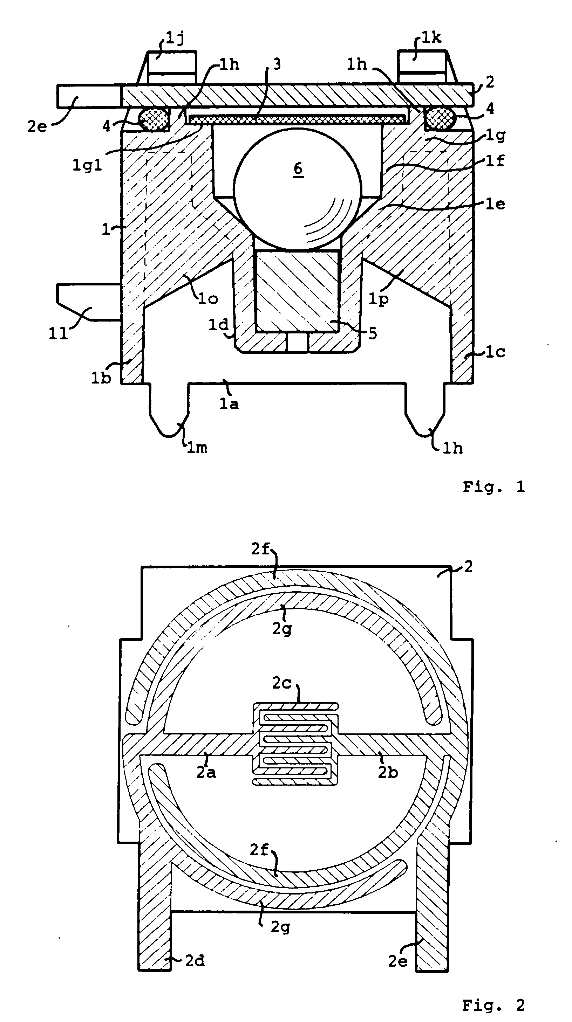

In Fig. 1 ist mit 1 das im Längsschnitt dargestellte Gehäuse bezeichnet, das weitgehend als Hohlkörper ausgebildet ist. Das im Spritzgußverfahren aus Kunststoff hergestellte quaderförmige Gehäuse besteht im wesentlichen aus vier relativ dünnen Seitenwänden. Teilweise sichtbar ist die Rückwand la. Ferner erkennt man die im Schnitt dargestellten Seitenwände 1b und 1c. Für die Funktion wichtig ist das Innengehäuse, das aus einem hohlzylindrischen Abschnitt 1d, einem hohlkegelförmigen Abschnitt le und einem hohlzylindrischen Abschnitt lf besteht. Nach oben hin verbindet ein Flansch 1g das Innen- und Außengehäuse. Dieser Flansch geht in einen ringförmigen Steg 1h über, auf dem eine Leiterplatte 2 aufliegt. Innerhalb des Steges liegt eine dünne, kreisrunde Leitkunststoff-Matte 3. Außen um den Steg 1h herum ist ein Dichtungs-O-Ring 4 gelagert. Die Leiterplatte 2 stellt zugleich den Deckel des Gehäuses dar. Die Leiterplatte 2 preßt den O-Ring 4 dichtend zusammen und wird in dieser Lage durch federnde Haken lj, 1k gehalten. Diese Haken - insgesamt 4 an allen Ecken - sind aus dem Gehäuse herausgeformt.
In den Teil ld des inneren Gehäuses ist ein zylindrischer Dauermagnet 5 eingepreßt. In dem hohlkegeligen Abschnitt le ruht ein ferromagnetischer Trägheitskörper 6, der von dem Magneten 5 mit einer ganz bestimmten Kraft gehalten wird.
Wenn der Schalter einer über dem Grenzwert liegenden Beschleunigung ausgesetzt wird, löst sich der Trägheitskörper 6, eine Stahlkugel, von dem Magneten 5 und prallt gegen die leitfähige Matte 3. Diese Matte überbrückt kurzzeitig die Leiterbahnen, deren Anordnung aus der Draufsicht in Fig. 2 hervorgeht.
Auf der Leiterplatte 2 sind Leiterbahnen 2a und 2b vorgesehen, die sich im Zentrum 2c kammartig gegenüberstehen. Wenn die leitfähige Matte 3 auf das Zentrum 2c aufgepreßt wird, entstehen mehrere Teilkontakte, so daß eine sichere Signalgebung gewährleistet ist.
Die Leiterplatte 2 weist zwei Anschlußstreifen 2d und 2e auf, die in eine Trägerplatte eingelötet werden können.
Zum konstruktiven Aufbau des Gehäuses 1 ist noch nachzutragen, daß aus der linken Seitenwand 1b eine Lasche 11 heraustritt, so daß sich zusammen mit den Anschlußstreifen 2d und 2e eine Dreipunktbefestigung ergibt.
Zur alternativen Befestigung in einer um 90° versetzten Ebene sind Beine 1m und 1n an die Rückwand la angeformt. Zwei weitere Beine befinden sich an der nicht dargestellten Parallelwand.
Zwischen den Seitenwänden 1b, 1c und dem Innengehäuse 1d, 1e, lf sind Versteifungsstege lo und lp eingeformt. Dadurch kommt das Gesamtgehäuse mit sehr dünnen Wänden aus. Dies hat den Vorteil, daß die Schrumpfung und der Verzug bei der Abkühlung des heißgespritzten Gehäuses gering bleibt.
Um die Leiterbahnen vor Oxyd- oder Sulfidschichten zu schützen, können sie im Lötbad oder galvanisch verzinnt werden.

In Fig. 2 ist dargestellt, daß die Leiterbahnen im Bereich 2c kammartig ineinandergreifen.
Die Kontaktelemente auf der Leiterplatte könnten aber auch sternförmig von innen nach außen und von außen nach innen ineinandergreifen, um das Ansprechen völlig richtungsunabhängig zu gestalten.
Aus dem Leiterbild nach Fig. 2 ist ferner ersichtlich, daß im Bereich der Auflagefläche des O-Ringes zwei Leiterbahnen 2f, 2g ringförmig parallel aneinander vorbeigeführt sind. Damit wird erreicht, daß der O-Ring im Bereich zwischen den erhabenen Leiterbahnen besonders gut abdichtet.

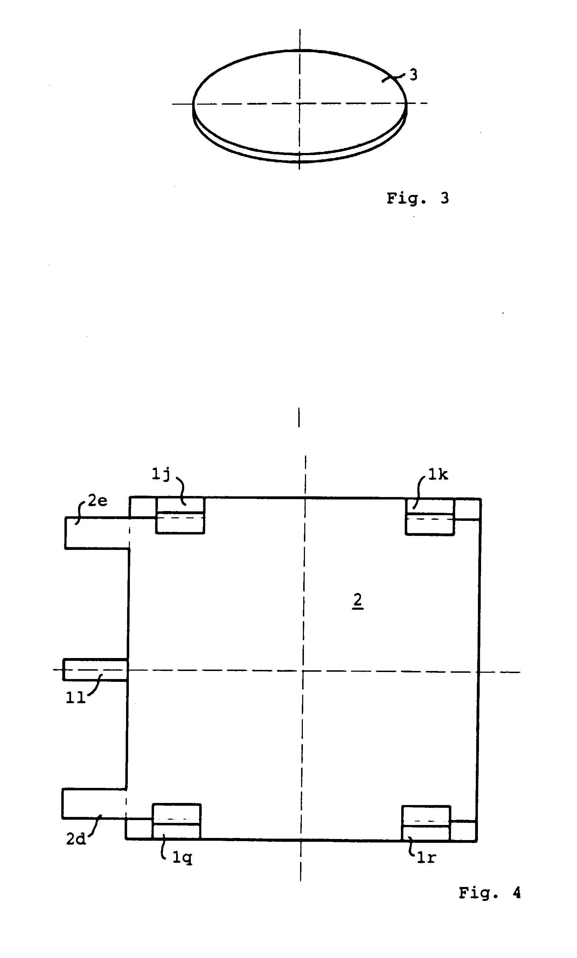

Fig. 3 zeigt in Perspektive die leitfähige Matte 3, die als dünne, kreisrunde Scheibe ausgebildet ist.

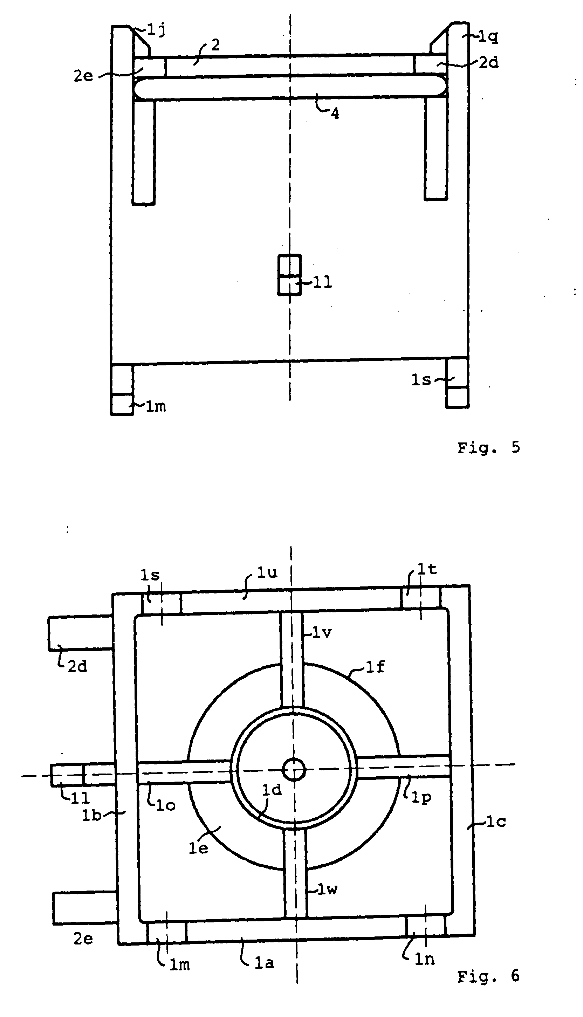

Fig. 4 stellt den Grenzwertschalter von oben dar. Man erkennt die vier Federhaken 1j, 1k, 1q, 1r. Die Haken pressen die Leiterplatte 2 auf die darunterliegende O-Ring-Dichtung.

Fig. 5 gibt die Ansicht von links wieder. Man erkennt die durch tiefe Einschnitte hergestellten federnden Haken 1j und 1q.

Fig. 6 zeigt den Grenzwertschalter von unten. Zwischen den Seitenwänden 1a, 1b, 1c und 1u und den inneren Gehäuseteilen 1d, 1e und 1f sind die Versteifungsstege 1o, 1p, 1v und 1w angeordnet, die dem Gehäuse bei geringstem Gewicht eine optimale Stabilität verleihen.

### Gewerbliche Verwertbarkeit

Der dargestellte, neuartige Beschleunigungsgrenzwertschalter ist hervorragend geeignet, in Kraftfahrzeugen jeder Art eingesetzt zu werden, um Airbags, Gurtstraffersysteme und andere, der Sicherheit dienende Elemente im Fahrzeug zu aktivieren.

### Bezugszeichenliste

- 1: Gehäuse
- 1a: Rückwand
- 1b, 1c: Seitenwände
- 1d: hohlzylindrischer Abschnitt
- 1e: hohlkegeliger Abschnitt
- 1f: hohlzylindrischer Abschnitt
- 1g: Flansch
- 1g1: Lagerfläche
- 1h: ringförmiger Steg
- 1j, 1k: federnde Haken
- 1l: Lasche
- 1m, 1n: Beine
- 1o, 1p: Versteifungsstege
- 1q, 1r: Federhaken
- 1s, 1t: Füße
- 1u: Seitenwand
- 1v, 1w: Versteifungsstege
- 2: Leiterplatte
- 2a, 2b: Leiterbahnen
- 2c: Zentrum
- 2d, 2e: Anschlußstreifen
- 2f, 2g: Leiterbahnen
- 3: Leitkunststoff-Matte
- 4: Dichtungs-O-Ring
- 5: Dauermagnet
- 6: Trägheitskörper

## Patentansprüche

1. Beschleunigungsgrenzwertschalter mit einem kugelförmigen Trägheitskörper (6) aus ferromagnetischem Material, der von einem Dauermagneten (5) in Ruhestellung gehalten ist, dem auf einer Leiterplatte (2) zwei symmetrisch ineinandergreifende Kontaktelemente (2a,2b) genüberstehen, wobei zwischen dem Trägheitskörper (6) und der Leiterplatte (2) eine elastische, leitfähige Membran (3) befestigt ist, die beim Auftreffen des Trägheitskörpers (6) verformt wird und dabei die Kontaktelemente (2a,2b) verbindet,
dadurch gekennzeichnet,
daß der rotationssymmetrische Innenraum des Schalters (1e, lf) eine ringförmige Lagerfläche (lgl)für eine dünne Leitkunststoff-Matte (3) aufweist,
daß die Leiterplatte (2) als Gehäusedeckel auf einem umlaufenden Gehäusesteg (1h) aufliegt,
daß außerhalb dieses Steges (1h) ein Dichtungsring (4) liegt und
daß die Leiterplatte (2) unter Deformation des Dichtungsringes (4) von gehäuseseitig angeformten, federnden Haken (1j, 1k) gehalten ist.

2. Beschleunigungsgrenzwertschalter nach Anspruch 1, dadurch gekennzeichnet, daß die Leiterplatte zwei angeformte Anschlußstreifen (2d, 2e) aufweist und daß die Leiterbahnen (2a, 2b, 2c) verzinnt sind.

3. Beschleunigungsgrenzwertschalter nach Anspruch 1, dadurch gekennzeichnet, daß das gesamte Gehäuse (1) einschließlich der federnden Haken (1j, 1k) aus einem formbeständigen, elastischen Kunststoff gespritzt ist.

4. Beschleunigungsgrenzwertschalter nach Anspruch 1, dadurch gekennzeichnet, daß das quaderförmige Gehäuse (1) weitgehend hohl gestaltet ist, indem es lediglich aus vier dünnen Seitenwänden (1a, 1b, 1c), dem oberen Verbindungsflansch (1g) und dem sich daran anschließenden trichterförmigen Innengehäuse (1d, 1e, 1f) zur Aufnahme des Dauermagneten (5) und des Trägheitskörpers (6) besteht.

5. Beschleunigungsgrenzwertschalter nach Anspruch 4, dadurch gekennzeichnet, daß zwischen den Seitenwänden (1b, 1c) und dem trichterförmigen Innengehäuse (1e, 1f) Versteifungsstege (lo, lp) angeordnet sind.

6. Beschleunigungsgrenzwertschalter nach Anspruch 1, dadurch gekennzeichnet, daß das Magnetsystem lediglich aus einem eingepreßten, zylindrischen Dauermagneten (5) ohne Rückschlußkörper besteht.

7. Beschleunigungsgrenzwertschalter nach Anspruch 1, dadurch gekennzeichnet, daß die Kontaktelemente der Leiterplatte (2) sternförmig ineinandergreifen, um das Ansprechen richtungsunabhängig zu gestalten.

8. Beschleunigungsgrenzwertschalter nach Anspruch 1, dadurch gekennzeichnet, daß im Bereich der Auflagefläche des O-Ringes (4) zwei erhabene Leiterbahnen (2f, 2g) ringförmig parallel angeordnet sind, um die Abdichtung zu verbessern.

## Claims

1. Acceleration limiting value switch including a spherical inertial body (6) of ferromagnetic material which is held in its rest position by a permanent magnet (5), and two symmetrically inter-meshing contact elements (2a, 2b) which are located opposite thereto on a circuit board (2), wherein a resilient, conductive membrane (3) is mounted between the inertial body (6) and the circuit board (2), said membrane becoming deformed when struck by the inertial body (6) thereby connecting the contact elements (2a, 2b),
characterised in
that the rotationally symmetrical interior of the switch (le, 1f) comprises an annular support surface (1g1) for a thin conductive mat (3) of synthetic material,
that the circuit board (2) rests on a web (1h) extending peripherally of the housing to form a cover for the housing,
that a sealing ring (4) surrounds said web (1h) and
that the circuit board (2) is held in place with deformation of the sealing ring (4) by spring hooks (1j, 1k) projecting from the housing.

2. Acceleration limiting value switch in accordance with Claim 1, characterised in that the circuit board comprises two projecting terminal strips (2d, 2e) and that the conductive tracks (2a, 2b, 2c) are tinned.

3. Acceleration limiting value switch in accordance with Claim 1, characterised in that the whole housing (1) including the spring hooks (1j, 1k) is injection moulded from a shape-retentive, resilient synthetic material.

4. Acceleration limiting value switch in accordance with Claim 1, characterised in that the parallelepiped housing (1) is substantially hollow in that it merely consists of four thin side walls (1a, 1b, 1c), the upper connecting flange (1g) and the funnel-shaped inner housing (1d, 1e, 1f) attached thereto for accommodating the permanent magnet (5) and the inertial body (6).

5. Acceleration limiting value switch in accordance with Claim 4, characterised in that stiffening webs (1o, 1p) are disposed between the side walls (1b, 1c) and the funnel-shaped inner housing (1e, 1f).

6. Acceleration limiting value switch in accordance with Claim 1, characterised in that the magnet system merely consists of a cylindrical permanent magnet (5) without keeper which is pressed into position.

7. Acceleration limiting value switch in accordance with Claim 1, characterised in that the contact elements of the circuit board (2) inter-mesh in radial manner so that the actuating process is directionally independent.

8. Acceleration limiting value switch in accordance with Claim 1, characterised in that two raised conductive tracks (2f, 2g) are arranged in parallel, in annular fashion in the region of the support surface for the O ring (4) so as to improve the sealing properties.

## Revendications

1. Commutateur de valeurs limites d'accélération avec un corps d'inertie sphérique (6) en matériau ferromagnétique qui est maintenu par un aimant permanent (5) en position de repos, auquel sont opposés sur une plaquette (2) deux éléments de contact (2a, 2b) s'engageant symétriquement l'un dans l'autre, où il est fixé entre le corps d'inertie (6) et la plaquette (2) une membrane élastique conductrice (3) qui, lors du heurt du corps d'inertie (6) est déformée et, ce faisant, relie les éléments de contact (2a, 2b),
caractérisé
en ce que l'espace intérieur symétrique en rotation du commutateur (1e, 1f) présente une surface de palier annulaire (1g1) pour un mince tapis en matière synthétique conductrice (3),
en ce que la plaquette (2) repose en tant que couvercle de boîtier sur une nervure de boîtier (1h) s'étendant tout autour,
en ce qu'il se trouve à l'extérieur de cette nervure (1h) une bague d'étanchéité (4) et
en ce que la plaquette (2), sous déformation de la bague d'étanchéité (4), est retenue par des crochets élastiques (1j, 1k) rapportés par formage au côté du boîtier.

2. Commutateur de valeurs limites d'accélération selon la revendication 1, caractérisé en ce que la plaquette présente deux bandes de raccordement rapportées par formage (2d, 2e) et que les circuits conducteurs (2a, 2b, 2c) sont étamés.

3. Commutateur de valeurs limites d'accélération selon la revendication 1, caractérisé en ce que l'ensemble du boîtier (1), y compris les crochets élastiques (1j, 1k) sont réalisés par injection en une matière synthétique élastique résistant à la déformation.

4. Commutateur de valeurs limites d'accélération selon la revendication 1, caractérisé en ce que le boîtier parallélépipède (1) est dans une grande mesure d'une configuration creuse, en ce qu'il est constitué uniquement de quatre parois latérales minces (1a, 1b, 1c), du rebord supérieur de liaison (1g) et du boîtier intérieur (1d, 1e, 1f) en forme d'entonnoir, faisant suite, pour la réception de l'aimant permanent (5) et du corps d'inertie (6).

5. Commutateur de valeurs limites d'accélération selon la revendication 4, caractérisé en ce que sont disposées entre les parois latérales (1b, 1c) et le boîtier intérieur en forme d'entonnoir (1e, 1f) des nervures de renforcement (1o, 1p).

6. Commutateur de valeurs limites d'accélération selon la revendication 1, caractérisé en ce que le système magnétique est constitué uniquement d'un aimant permanent cylindrique inséré par pression (5) sans corps de fermeture arrière.

7. Commutateur de valeurs limites d'accélération selon la revendication 1, caractérisé en ce que les éléments de contact de la plaquette (2) s'engagent les uns dans les autres à la manière d'une étoile pour configurer la réponse pour qu'elle soit indépendante de la direction.

8. Commutateur de valeurs limites d'accélération selon la revendication 1, caractérisé en ce que, au voisinage de la surface d'application du joint torique (4), deux circuits conducteurs surélevés (2f, 2g) sont disposés parallèlement en anneau pour améliorer l'étanchéité.
